**Europäisches Patentamt**

**European Patent Office**

**Office européen des brevets**

(19)

(11) Numéro de publication: **0 033 811**
**B1**

(12)

# FASCICULE DE BREVET EUROPEEN

(45) Date de publication du fascicule du brevet: **14.12.83**

(51) Int. Cl.³: **H 04 J 3/12, H 04 L 25/493**

(21) Numéro de dépôt: **80400193.1**

(22) Date de dépôt: **07.02.80**

(54) Procédé de compression des informations de signalisation transmises dans un train d'informations numériques MIC multiplexées.

(43) Date de publication de la demande:
**19.08.81 Bulletin 81/33**

(45) Mention de la délivrance du brevet:
**14.12.83 Bulletin 83/50**

(84) Etats contractants désignés:
**BE DE GB LU NL**

(56) Documents cités:

ELECTRICAL COMMUNICATION, vol. 48, no. 1 et 2; 1973 LONDRES (GB) W. DIETZE et al.: "Economic aspects of time division multiplex data transmission" pages 193-203

WESTERN UNION TECHNICAL REVIEW, vol. 22, no. 3, 1968 NEW YORK (US) D.J. KOSTAS et al.: "PCM-D4 channels" pages 94-102

I.E.E.E. INTERNATIONAL ZURICH SEMINAR ON DIGITAL COMMUNICATIONS, 12-15 mars 1974 NEW YORK (US) DIETRICH: "Coding of speech signals using a switched quantizer" pages A4(1) à A4(4)

CABLES ET TRANSMISSION, vol. 29, no. 3, juillet 1975 PARIS (FR) DAGUET et al.: "Système M.I.C. à 30 voies à codage individuel" pages 267-291

(73) Titulaire: **SOCIETE ANONYME DE TELECOMMUNICATIONS**
**40 avenue de New York**
**F-75116 Paris (FR)**

(72) Inventeur: **De Passoz, Guy André Marcel**
**19 rue du Grand Veneur**
**F-77330 Lesigny (FR)**

(74) Mandataire: **Bloch, Robert et al,**
**Cabinet ROBERT BLOCH 39 avenue de Friedland**
**F-75008 Paris (FR)**

Courier Press, Leamington Spa, England.

**0 033 811**

Procédé de compression des informations de signalisation transmises dans un train d'informations numériques MIC multiplexées

La présente invention concerne un procédé de traitement des informations de signalisation transmises dans un train d'informations numériques MIC multiplexées, destiné à réduire de moitié le débit des informations de signalisation sans perte d'information.

Selon les normes actuelles (voir par exemple de DAGUET et al dans la revue Cables et Transmission, Vol 29, No 3, Juillet, 1975, page 276, lignes 1—37), un train numérique d'informations codées MIC transmis au rythme de 2048 kbits/s est composé de trames de multiplexage de 32 intervalles de temps d'octet IT, parmi lesquels 30 sont affectés à la transmission de signaux d'information tels que des échantillons de parole. Selon l'avis G 732 du CCITT (Comité Consultatif International Télégraphiques et Téléphonique), l'un des deux intervalles de temps disponibles, appelé IT16, est affecté aux informations de signalisation. Les intervalles de temps IT16 de 16 trames consécutives constituent une multitrame comprenant 16 octets. Les intervalles de temps IT16 sont divisés en deux parties de 4 éléments binaires (e.b.). L'intervalle de temps IT16 de la première trame TrO contient un mot de verrouillage de multitrame 0000 et une séquence d'informations complémentaires. Chaque moitié des intervalles de temps IT16 des autres trames Tr1 à Tr15 contient les informations de signalisation relatives à chacune des 30 voies d'informations utiles, les quatre e.b. a, b, c, d correspondants appartenant à des voies de signalisation indépendantes.

Au total, le débit numérique de chaque voie de signalisation est donc 500 bits/s. Ce débit est encore très rapide eu égard aux informations à transmettre, et les informations de signalisation sont largement redondantes.

On connaît déjà de nombreux procédés de réduction du débit numérique. L'article de Manfred Dietrich au Séminaire de Zürich 1974 (Proceedings of the International Seminar on Digital Communications, 12—15 mars 1974, publié par 1 EEE, New York, pages A4(1) à A4(4)) décrit un procédé pour réduire de moitié le débit numérique pour les informations de parole transmises sur les voies téléphoniques, mais ne prévoit pas de traitement pour les informations complémentaires telles que les informations de signalisation.

Si l'on soumet deux trains numériques entrants à un traitement de compression des signaux de parole sans comprimer aussi les informations de signalisation, et que l'on réunit les deux trains entrants en un train unique de même débit numérique, le nombre de voies disponibles sera réduit. Il est donc souhaitable de soumettre également les informations de signalisation à un traitement de compression.

On pourrait envisager pour ce faire de ne transmettre qu'un élément binaire sur deux chaque voie de signalisation. Une telle solution aurait l'inconvénient de doubler la distorsion due à l'échantillonnage sur les signaux de signalisation. Dans le cas d'un débit numérique de 500 bits/s, la distorsion passerait de 2 à 4 ms.

L'invention a donc pour but de réaliser une compression des informations de signalisation sans augmentation de la distorsion.

Dans le procédé selon l'invention pour la compression des informations de signalisation, on extrait les informations de signalisation du train numérique et on effectue en parallèle, pour chaque voie de signalisation, un traitement consistant à coder les transitions par un groupe d'éléments binaires dont le premier indique si la transition est montante ou descendante et le ou les suivants indiquent dans quelle nième fraction d'une période d'horloge correspondant à un rythme $H_1/n$ se situe la transition, et à transmettre inchangé au moins un des éléments binaires qui suivent la transition, les signaux $L_a$, $L_b$, ... obtenus contenant la même quantité d'informations que les voies de signalisation, mais ayant un débit divisé par n.

De préférence, dans le cas où l'on veut réduire le débit de moitié (n = 2), on transmet inchangés un sur deux des éléments binaires qui suivent une transition.

Les signaux $L_a$, $L_b$, ... représentatifs des voies de signalisation d'un train numérique entrant peuvent être multiplexés avec les signaux $L'_a$, $L'_b$, ... issues d'un second train numérique en un signal unique de même débit numérique que les signaux entrants, mais portant une quantité double d'informations.

L'invention sera bien comprise à la lecture de la description ci-après, faite en référence aux dessins annexés.

La figure 1 est une représentation globale d'un dispositif pour réduire deux trains d'informations MIC multiplexées en un train unique de même débit.

La figure 2 est une représentation globale du dispositif de traitement des informations de signalisation sous forme de multitrames.

La figure 3 représente en mode TTL un circuit selon l'invention pour le transcodage d'une voie de signalisation.

La figure 4 est un diagramme des temps illustrant le fonctionnement du circuit de la fig. 3.

La figure 5 montre la structure d'une supertrame regroupant les voies de signalisation de deux trains entrants.

La figure 6 représente le dispositif de réception servant à reconstituer les multitrames entrantes à partir d'une supertrame.

2

La figure 7 illustre un mode de réalisation d'un des circuits A' constituant le dispositif de réception.

La figure 8 est un diagramme des temps illustrant le fonctionnement du circuit de la fig. 7.

On se bornera dans la description suivante à décrire la réduction de deux trains numériques, ou jonctions, entrants en une jonction unique. On peut cependant traiter selon un procédé du même type trois ou quatre jonctions entrantes et les transmettre sur une même jonction sortante.

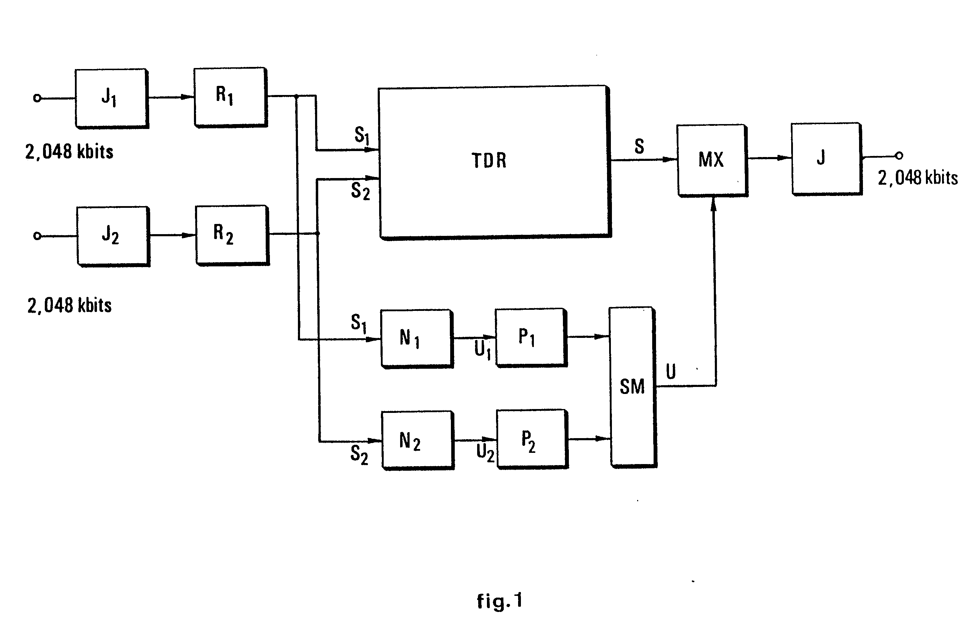

En se référant à la figure 1, deux jonctions $J_1$ et $J_2$ codées en code MIC, du type $HDB_3$ par exemple, sont reçues au moyen de dispositifs respectifs $R_1$ et $R_2$ de reconnaissance de trame. Le dispositif $R_1$ (resp. $R_2$) reçoit à son entrée le signal $J_1$ (resp. $J_2$) codé incluant la signalisation qui est insérée dans la trame de multiplexage dans un intervalle de temps de voie spécifique appelé IT16. Ce dispositif $R_1$ reconnaît le verrouillage de trame contenu dans le signal $J_1$ et fournit un signal $S_1$ dans lequel le signal de données codé est séparé des informations contenues dans les IT16. Un dispositif TDR, tel que par exemple celui décrit dans l'article précité de M. DIETRICH, permet de comprimer les deux trains numériques de données en un même train S sortant à 2,048 kbits/s par une réduction des débits numériques pour les échantillons de parole codés ou autres données. Les signaux $S_1$ et $S_2$ contenant les données ainsi que leurs IT16, lesquels sont fournis par les dispositifs $R_1$ et $R_2$ de reconnaissance de trame, sont appliqués respectivement à l'entrée de deux dispositifs $N_1$ et $N_2$ de reconnaissance de multitrame. Les dispositifs $N_1$ et $N_2$ fournissent des signaux $U_1$ et $U_2$ qui sont trans-codés au moyen de deux dispositifs $P_1$ et $P_2$ de réduction de débit numérique. Un dispositif SM reçoit les signaux issus des dispositifs $P_1$ et $P_2$ et les multiplexe afin de former, en sortie, un seul signal U, que l'on multiplexe ensuite au moyen du dispositif MX avec le signal de données S également comprimé.

Un signal de jonction J présentant un débit réduit de moitié est obtenu en sortie du dispositif MX. Le dispositif TDR de réduction de débit numérique utile a été décrit dans de nombreux articles et ne fait pas l'objet de la présente invention. On se bornera ici à décrire le traitement des deux trains d'IT16 des jonctions entrantes afin de les réduire en un seul train d'IT16 résultant, n'introduisant pas de distorsion supplémentaire et de débit numérique deux fois plus faible.

L'avis G 732 du CCITT prévoit que chaque jonction de débit 2,048 kbits/s est organisée en multitrame formée de 16 trames consécutives numérotées de 0 à 15. Le signal de verrouillage de multitrame est 0000 et occupe les intervalles de temps d'élément binaire numérotés de 1 à 4 de l'intervalle de temps de voie 16 ou IT16 dans la trame 0. La seconde partie de l'intervalle de temps IT16 de cette trame 0, également formée de 4 bits, est réservée à la transmission d'informations complémentaires. D'une façon générale, les intervalles de temps IT16 de toutes les trames entrantes reçoivent huit bits.

L'intervalle de temps IT16 de la trame 1 est formé d'une première partie composée des bits a, b, c, d appartenant à quatre voies de signalisation indépendantes relatives à la voie 1, et d'une seconde partie composée des bits a, b, c, d de signalisation de la voie 16. Il en est de même pour la signalisation des voies 2 à 30 comme résumé dans le tableau ci-après.

| IT16<br>Tr 0 | | IT16<br>Tr 1 | | IT16<br>Tr 2 | | IT16<br>Tr 15 | |
|---|---|---|---|---|---|---|---|
| 0000 | xyxx | abcd | abcd | abcd | abcd | abcd | abcd |
| | | voie 1 | voie 16 | voie 2 | voie 17 | voie 15 | voie 30 |

Il est bien recommandé également de ne pas utiliser la combinaison 0000 pour les bits de signalisation des voies 1 à 15.

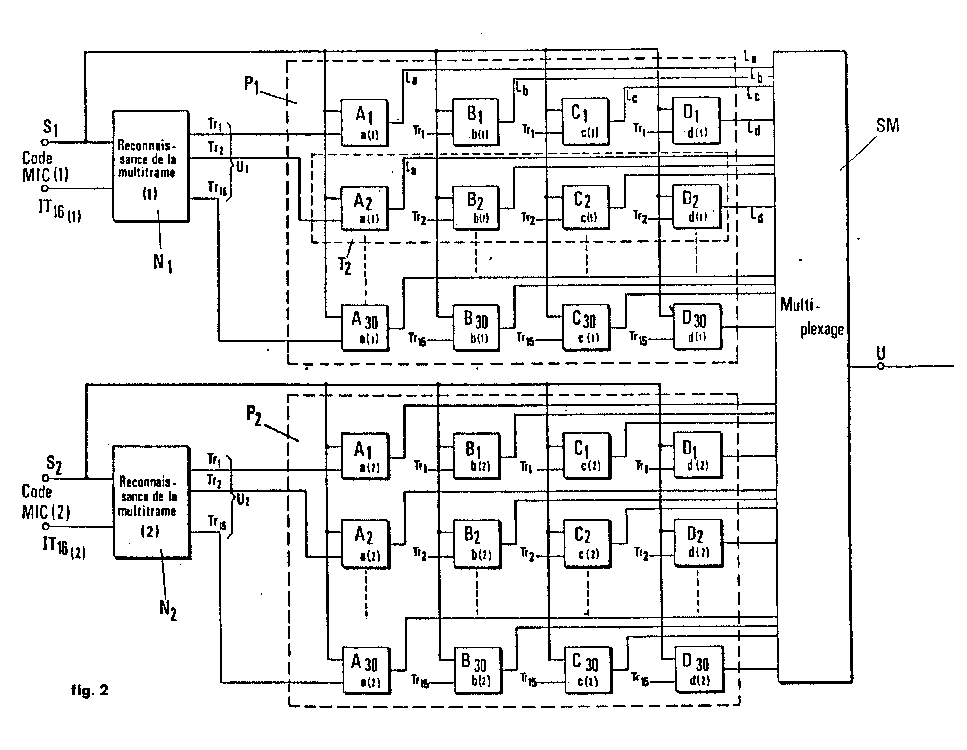

Conformément à la figure 2, les dispositifs $N_1$ et $N_2$ de reconnaissance de multitrame peuvent ainsi reconnaître le signal de verrouillage de multitrame des jonctions $J_1$ et $J_2$ et fournissent en sortie les 15 intervalles de temps IT16, en parallèle, correspondant chacun aux trames Tr1 ... Tr15. Ces bits arrivent donc pour la jonction $J_1$ (resp. $J_2$) à l'entrée d'un dispositif $P_1$ (resp. $P_2$) de transcodage permettant selon l'invention de réduire la quantité d'informations de signalisation transmises. Le dispositif $P_1$ se compose de trente dispositifs $T_i$ ($A_i$, $B_i$, $C_i$, $D_i$), avec $1 \leqslant i \leqslant 30$, placés en parallèle et traitant en parallèle les intervalles de temps IT16 de chaque jonction. Chaque dispositif $T_i$ se compose lui-même de quatre transcodeurs élémentaires $A_i$, $B_i$, $C_i$, $D_i$, permettant de transformer les quatre bits de signalisation de fréquence 500 Hz de chaque trame $Tr_i$ en quatre bits de fréquence 250 Hz.

Les quinze premiers dispositifs $T_i$ ($1 \leqslant i \leqslant 15$) traitent la première partie des IT16 entrants, les quinze dispositifs $T_i$ ($16 \leqslant i \leqslant 30$) traitent la seconde partie des IT16.

Le dispositif $A_1$ traite le bit a de l'IT16 de la trame Tr1, $B_1$ traite le bit b de l'IT16 de la trame Tr1, $C_1$ traite le bit c, $D_1$ traite le bit d, où a, b, c, d sont les quatre voies de signalisation indépendantes, de débit 500 bits/s, relatives à une voie téléphonique, lesdits bits a, b, c, d occupant la moitié de l'intervalle de temps IT16 affectée à cette voie.

3

**0 033 811**

Le dispositif $A_1$ code les changements d'état du signal numérique correspondant à la voie de signalisation a. On compare, selon l'invention, le bit entrant au bit correspondant, de la multitrame précédente; on convient de coder 1 si le changement d'état est de 0 vers 1 et 0 si le changement d'état est de 1 vers 0. De plus, l'élément binaire suivant indique si le changement d'état a eu lieu pendant la première ou la seconde moitié de la période d'horloge correspondant au débit de 250 bits/s. Ce second élément binaire est 1 pour un changement d'état intervenant dans la première moitié de la période d'horloge et 0 pour un changement d'état intervenant dans la seconde moitié.

D'autre part, on transmet inchangés un sur deux des éléments binaires suivant ces deux bits, apparenant aux multitrames suivantes et précédant la transition suivante.

Le tableau suivant résume le codage des transitions effectué selon l'invention.

| Transition 1 0 | | Transition 0 1 | | Position de la transition |
|---|---|---|---|---|
| 1er bit | 2ème bit | 1er bit | 2ème bit | |
| 0 | 1 | 1 | 1 | 1ère moitié |
| 0 | 0 | 1 | 0 | 2ème moitié |

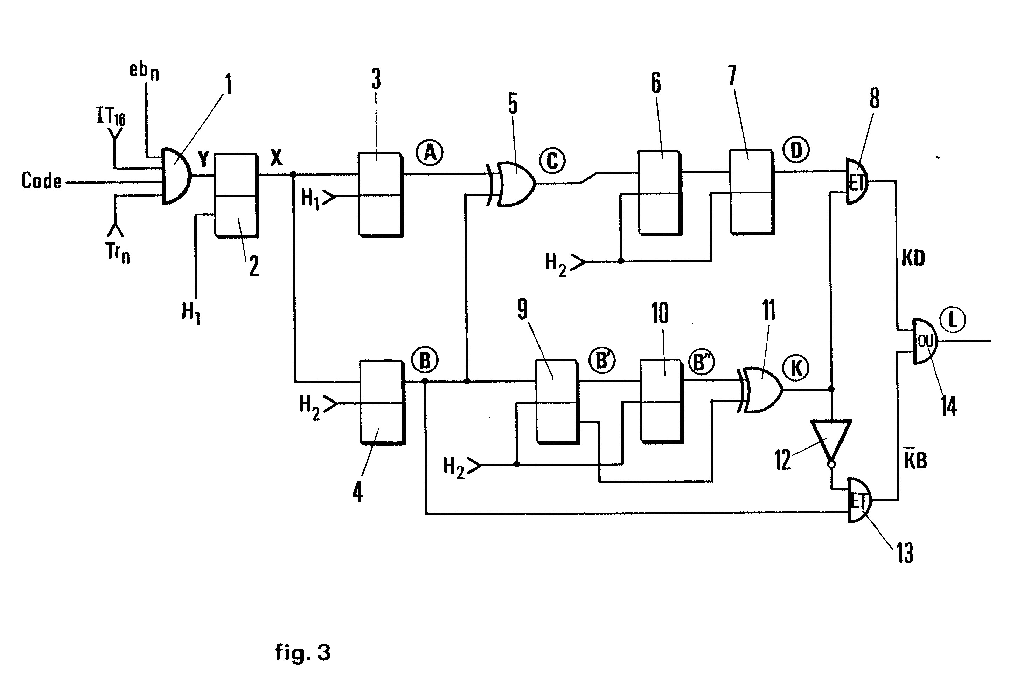

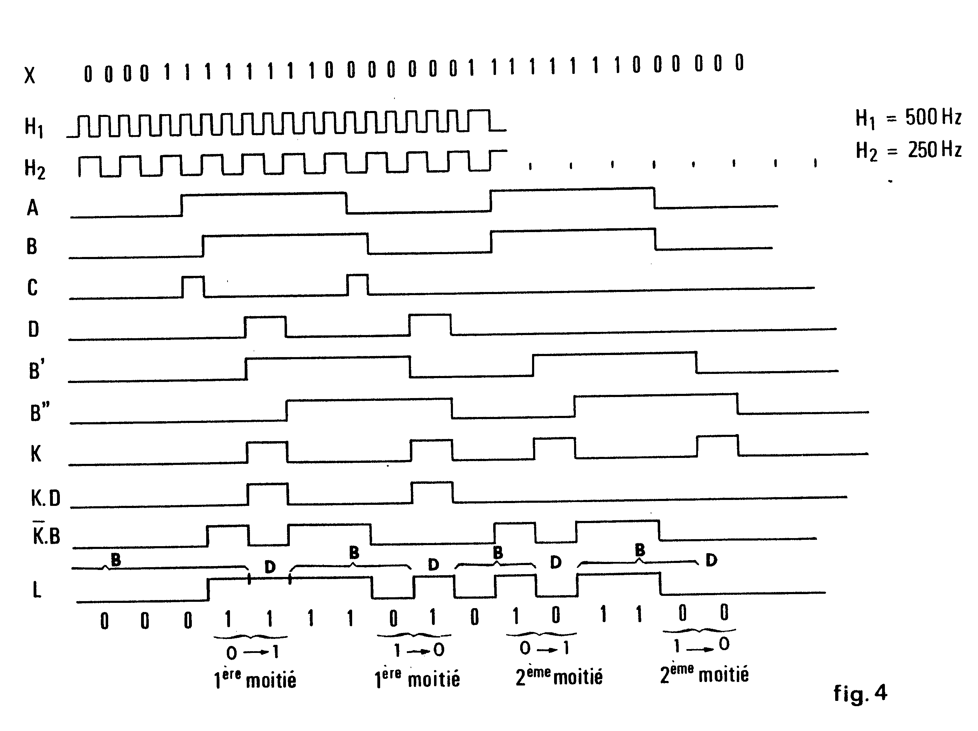

Un mode de réalisation du transcodage d'une voie de signalisation, par exemple la voie a, d'une trame, par exemple la trame 1 Tr1, est représenté sur la figure 3. Ce dispositif $A_1$ reçoit à son entrée un signal d'élément binaire $eb_n$ servant à sélectionner le bit a dans l'IT16, un signal de sélection des IT16, le signal de code à 2,048 kbits/s ainsi qu'un signal de sélection des trames Tr1. Ces quatre signaux sont transmis au moyen d'une porte ET(1) qui fournit à sa sortie un signal Y. Ce signal Y est appliqué à l'entrée d'une bascule 2 du type D recevant sur son entrée horloge le signal d'horloge $H_1$ de fréquence 500 Hz. Le signal X sortant de la sortie Q de la bascule 2 est appliqué, d'une part, à l'entrée d'une bascule 3 du type D, d'autre part, à l'entrée d'une autre bascule 4 du type D. Les différents signaux sont représentés sur la figure 4. La première bascule 3 reçoit sur son entrée horloge le signal $H_1$ à 500 Hz, tandis que la seconde bascule 4 reçoit sur son entrée horloge le signal d'horloge $H_2$ de fréquence moitié, soit 250 Hz. Les signaux A et B, respectivement obtenus à la sortie Q des bascules 3 et 4, sont introduits à l'entrée d'une porte OU EXCLUSIF 5 qui fournit à sa sortie un signal C que l'on applique à l'entrée d'une bascule 6 du type D recevant le signal $H_2$ sur sont entrée horloge. Le signal de sortie Q de la bascule 6 est appliqué à l'entrée d'une seconde bascule 7 du type D également qui reçoit à son entrée horloge le signal d'horloge $H_2$. Le signal D obtenu à la sortie Q de la bascule 7 est appliqué à l'entrée d'une porte ET8.

Le signal B fourni par la bascule 4 est également appliqué à l'entrée d'une bascule 9 également du type D recevant sur son entrée horloge le signal $H_2$. A la sortie Q de la bascule 9 on obtient un signal $B^i$ que l'on applique à l'entrée d'une autre bascule 10 également du type D et qui reçoit le signal $H_2$ à son entrée horloge. Le signal $B''$ est obtenu à la sortie Q de la bascule 10 et est appliqué à l'entrée d'une porte OU EXCLUSIF 11 qui reçoit également le signal fourni à la sortie $\overline{Q}$ de la bascule 9. Le signal K indiquant la position de 2ème bit de codage de transition est obtenu à la sortie de la porte 11. Le signal K est appliqué, d'une part, à l'entrée de la porte ET8 avec le signal D et, d'autre part, après inversion au moyen de l'inverseur 12 à l'entrée d'une porte ET 13. La porte 13 reçoit également le signal B et fournit à sa sortie un signal $\overline{K}B$. Le signal KD obtenu à la sortie de la porte ET 8 est appliqué avec $\overline{K}B$ à l'entrée d'une porte OU 14 qui fournit un signal L à sa sortie. Le signal L contient la même quantité d'informations que le signal d'entrée et en particulier l'information codée résultant de la comparaison du bit a entrant avec le bit correspondant a'' de la multitrame précédente. Le signal L présente en outre un débit moitié de celui de signal X d'entrée. On conviendra d'appeler ce signal $L_a$ pour le bit a, $L_b$ pour le bit b, $L_c$ pour le bit c, $L_d$ pour le bit d.

En reprenant la figure 2, le dispositif $A_1$ fournit un signal $L_a$ de signalisation transcodé de la trame 1. Les dispositifs $B_1$, $C_1$, $D_1$ transcodent de la même façon les voies (b), (c), (d) pour la trame 1 et fournissent au dispositif SM quatre signaux $L_a$, $L_b$, $L_c$, $L_d$ de signalisation correspondant à l'IT16 (voie 1) de la Tr1 contenant les informations de sa multitrame et celles de la multitrame précédente. Il en est de même pour les IT16 des quatorze autres trames de la même jonction $J_1$. Les secondes parties d'IT16 des trames Tr1 à Tr15 sont traitées de la même façon par les dispositifs transcodeurs $T_i$ ($A_i$, $B_i$, $C_i$, $D_i$) avec $15 \leqslant i \leqslant 30$.

Les quinze signaux IT16 transcodés de la jonction $J_1$ sont reçus en parallèle à l'entrée d'un multiplexeur SM qui reçoit également les quinze IT16 de la jonction $J_2$ en parallèle. Le multiplexeur SM est connu en soi. Le dispositif SM regroupe les IT16 de chaque trame et de chaque jonction, non plus selon une multitrame de 16 trames, mais selon une supertrame U de 32 trames, ladite supertrame étant formée d'une multitrame transcodée de la jonction $J_1$ et d'une multitrame transcodée de la jonction $J_2$.

4

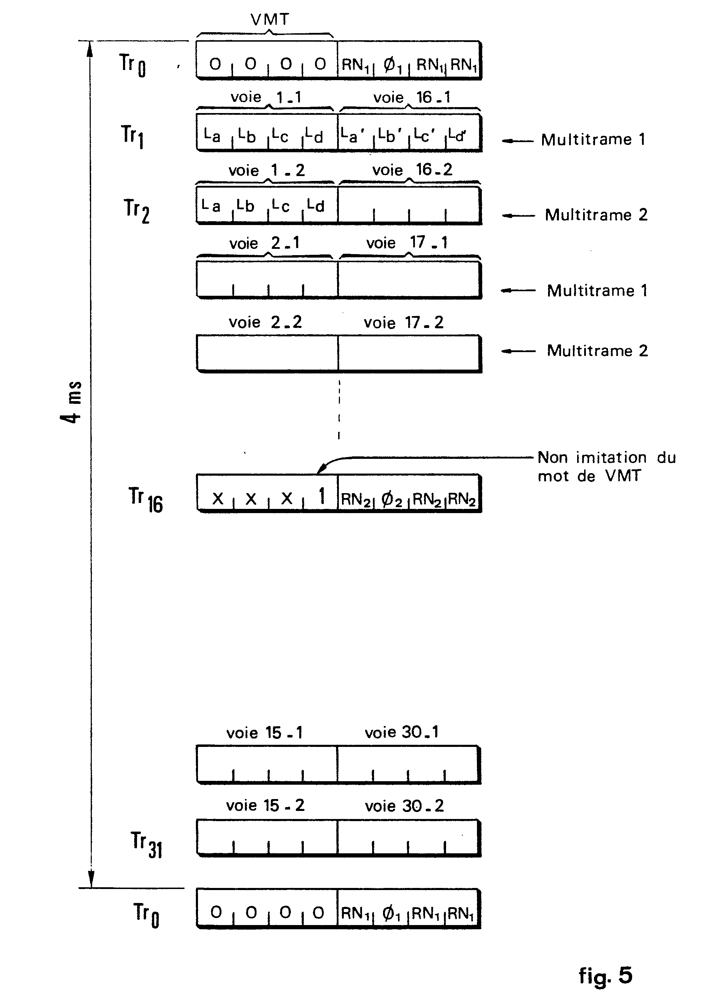

En se référant à la figure 5, une supertrame est représentée. Le signal de verrouillage de supertrame est indentique au signal de verrouillage d'une multitrame et égal à 0000: il occupe les intervalles de temps d'élément binaire numérotés de 1 à 4 de l'intervalle de temps IT16 dans la trame 0. Les quatre autres bits de l'intervalle de temps IT16 dans la trame 0 sont sont réservés à la transmission des informations complémentaires notées $RN_1$, $\emptyset_1$, $RN_1$, $RN_1$.

L'intervalle de temps IT16 de la trame 1 contient dans sa première moitié (bits $L_a$, $L_b$, $L_c$, $L_d$) la signalisation de la voie 1 de la première multitrame (voie 1—1) et dans sa seconde moitié la signalisation (bits $L_a$, $L_b$, $L_c$, $L_d$) de la voie 16 de la première multitrame. L'IT16 de la trame 2 contient dans sa première partie la signalisation (bits $L_a$, $L_b$, $L_c$, $L_d$) de la voie 1 de la seconde multitrame et dans sa seconde partie la signalisation de la voie 16 de la seconde multitrame. Ainsi, les IT16 de la supertrame selon l'invention sont alternativement les IT16 transcodés de la jonction 1 puis de la jonction 2 selon que l'on passe de la trame 1 à la trame 2. D'une manière générale, les IT16 de trame paire dans la supertrame sont ceux de la jonction 2 et ceux de trame impaire sont ceux de la jonction 1. Et ainsi de suite, l'IT16 de la trame 16 contient dans sa première partie des bits n'imitant pas un mot de verrouillage de multitrame et dans sa seconde partie des informations complémentaires de la seconde multitrame. L'IT16 de la trame 30 contient dans sa première partie la signalisation transcodée de la voie 15 de la première multitrame et dans sa seconde partie la signalisation de la voie 30 de la première multitrame (c'est encore l'IT16 transcodé de la trame 15 dans la première multitrame). Enfin, l'IT16 de la trame 31 est l'IT16 transcodé de la trame 15 dans la seconde multitrame. Ensuite est transmise la seconde supertrame présentant une même organisation.

On remarque dès à présent qu'il suffit d'un motif de verrouillage de supertrame toutes les 32 trames et non toutes les 16 trames, soit encore toutes les 4 ms. Une telle disposition permet de réaliser une économie en débit numérique.

Le signal de supertrame U est ensuite multiplexé, avec le signal S utile de débit numérique moitié, au moyen du multiplexeur MX qui fournit un signal de jonction de débit 2,048 Kbits/s égal à celui des jonctions $J_1$ et $J_2$ entrantes.

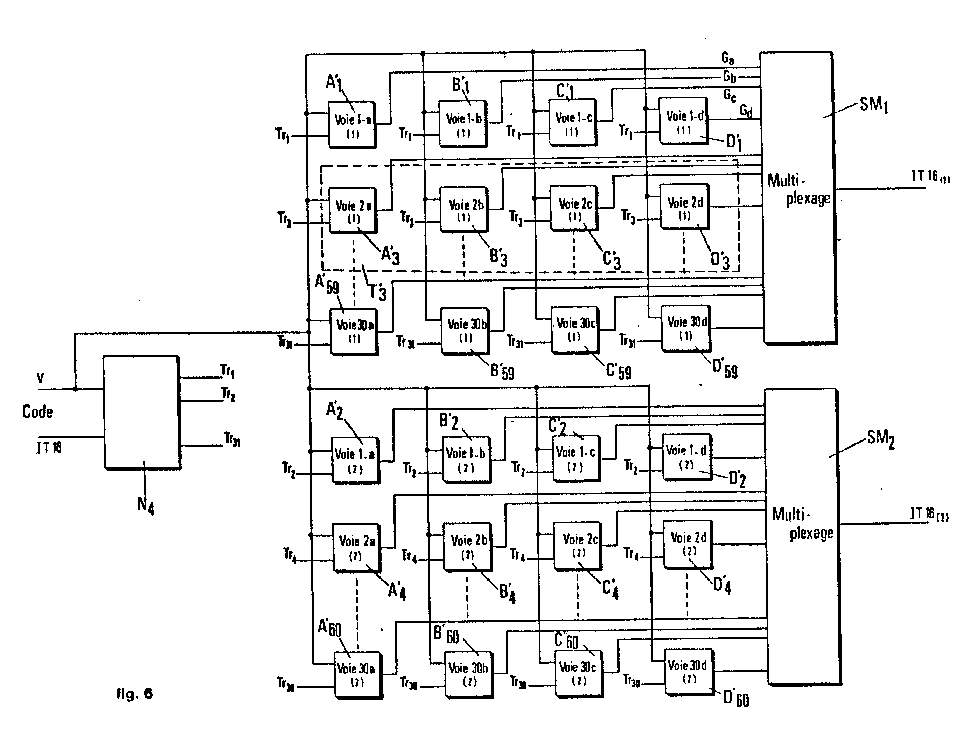

La figure 6 représente le dispositif de réception de la supertrame formée par les IT16. Un dispositif de reconnaissance de trame, non représenté sur le dessin, fournit le signal d'IT16 à l'entrée d'un dispositif N4 de reconnaissance de supertrame. Ce dispositif N4 reçoit également le signal de code V et fournit en sortie les 31 IT16 des 32 trames, formant la supertrame, en parallèle. Les IT16 des 31 trames Tr1, Tr2 ... Tr'31 sont appliqués à l'entrée de 60 dispositifs de décodage $T'_i$, $1 \leqslant i \leqslant 60$ selon l'invention, chaque $T'_i$ étant formé quatre dispositifs $A'_i$, $B'_i$, $C'_i$, $D'_i$. Le dispositif $A'_i$ traite le bit $L_a$ de voie 1 de la première multitrame. Le dispositif $A'_2$ traite le bit $L_a$ de la voie 1 de la deuxième multitrame. Le dispositif $A'_3$ traite le bit $L_a$ de la voie 2 de la première multitrame, etc.. Le dispositif $A'_{59}$ traite le bit $L_a$ de la voie 30 de la première multitrame. Le dispositif $A'_{60}$ traite le bit $L_a$ de la voie 30 de la seconde multitrame. Il en est de même pour les bits $L_b$, $L_c$, $L_d$.

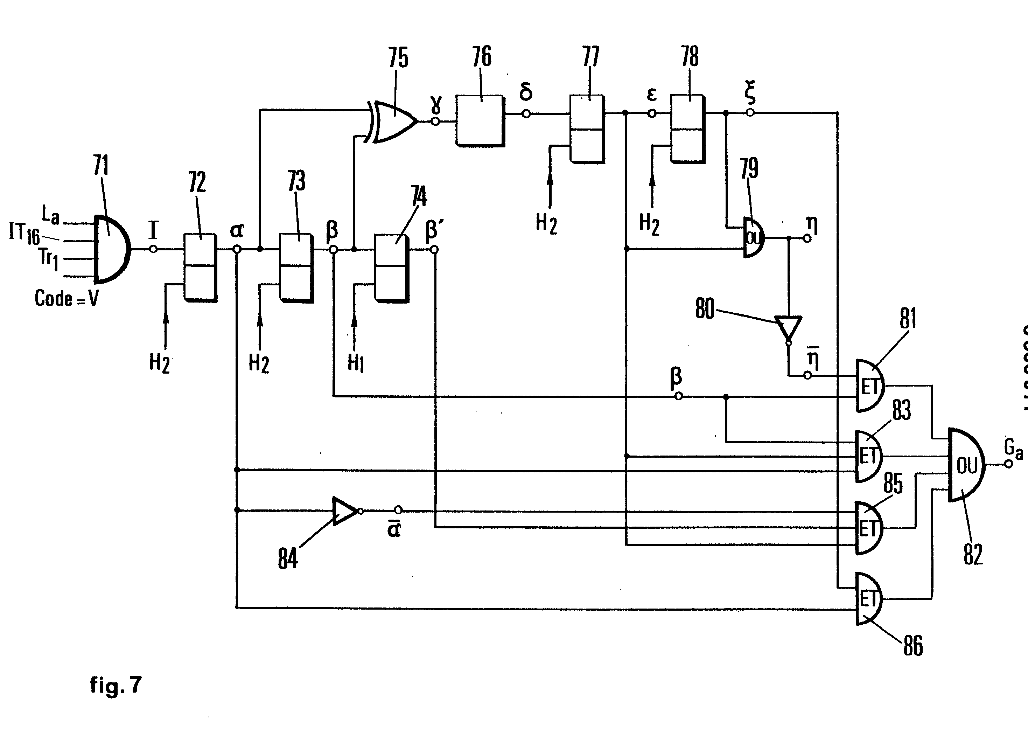

La figure 7 donne un exemple de réalisation d'un dispositif $A'_i$ de la figure 6. Le dispositif $A'_1$ se compose d'une porte ET 71 recevant un signal $eb_n$ de sélection du bit $L_a$, un signal de sélection des IT16, un signal de sélection des trames Tr1 et le signal V de code. La porte 71 fournit en sortie un signal I qui est appliqué à l'entrée d'une bascule 72 du type D dont l'entrée horloge reçoit le signal $H_2$ d'horloge à 250 Hz. A la sortie Q de la bascule 72 on obient un signal $\alpha$ qui est appliqué à l'entrée d'une autre bascule 73 du type D ainsi qu'à l'entrée d'une porte 75 OU EXCLUSIF, on applique également le signal $H_2$ à l'entrée horloge de la bascule 73 et on obtient à sa sortie Q un signal $\beta$ qui est, d'une part, appliqué à l'entrée de la porte 75 et, d'autre part, à l'entrée d'une autre bascule 74 du type D. Cette bascule 74 reçoit sur son entrée horloge le signal d'horloge $H_1$ de période 500 Hz et fournit à sa sortie Q un signal $\beta'$.

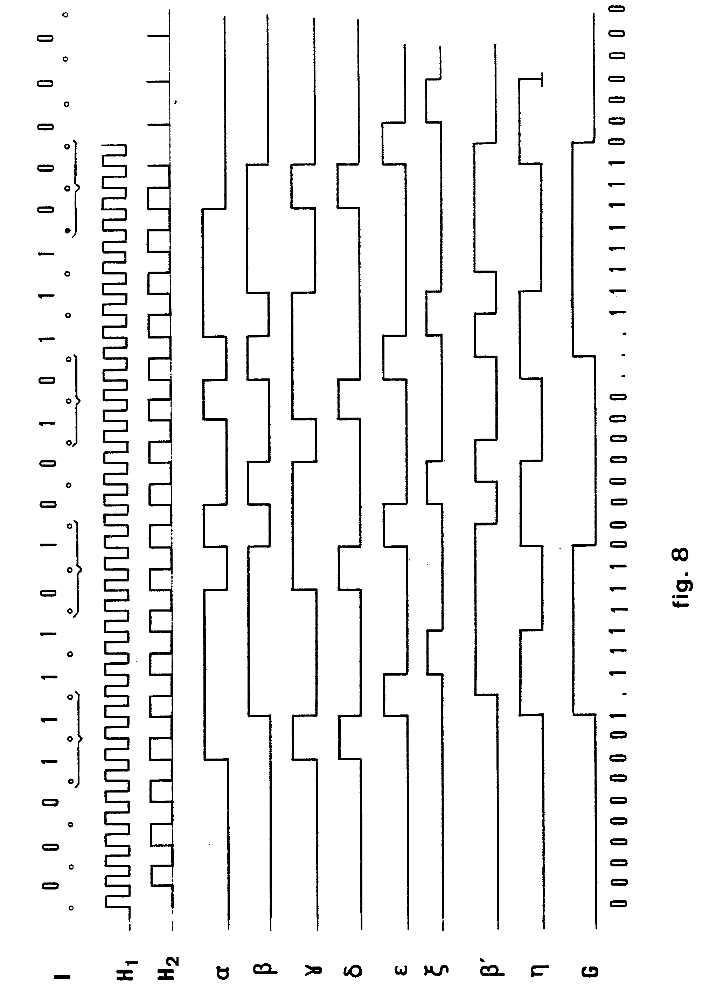

Un diagramme des temps représenté sur la figure 8 précise le traitement successif des signaux I, $\alpha$, $\beta$, $\beta'$ au moyen des différents dispositifs de la figure 7.

La porte 75 OU EXCLUSIF fournit, à partir des signaux $\alpha$ et $\beta$ un signal $\gamma$ qui reconnaît les transitions. Ce signal $\gamma$ est appliqué à l'entrée d'un monostable 76 qui fournit à sa sortie un signal $\delta$ indiquant la position du premier bit transcodé. Le signal $\delta$ est appliqué à l'entrée d'une bascule 77 du type D qui reçoit, à son entrée horloge, le signal $H_2$. La bascule 77 fournit à sa sortie Q un signal $\varepsilon$ représentant la position du deuxième bit transcodé. Ce signal $\varepsilon$ est appliqué à l'entrée d'une autre bascule 78 du type D qui reçoit sur son entrée horloge le signal d'horloge $H_2$. La bascule 78 fournit à sa sortie Q un signal $\zeta$ qui est appliqué à l'entrée de la porte 79 OU de même que le signal $\varepsilon$ issu de la bascule 77. On obtient à la sortie de la porte 79 un signal $\eta$ qui, après inversion au moyen d'un inverseur 80, est appliqué à l'entrée d'entrée d'une porte ET81. La porte ET81 reçoit également le signal $\beta$ de la bascule 73 et fournit à sa sortie un signal qun est appliqué à l'une des quatre entrées d'une porte 82 OU. La seconde entrée de la porte OU 82 reçoit le signal fourni par une seconde porte ET83 qui reçoit, d'une part, le signal $\beta$, d'autre part le signal $\varepsilon$ et le signal $\alpha$.

La troisième entrée de la porte OU 82 reçoit le signal fourni par une troisième porte ET85 qui reçoit le signal $\widetilde{\alpha}$ obtenu par inversion du signal $\alpha$ au moyen d'un inverseur 84, d'autre part le signal $\varepsilon$ et enfin le signal $\beta'$ issu de la bascule 74.

La quatrième entrée de la porte OU 82 reçoit le signal issu d'une quatrième porte ET86 qui reçoit à son entrée le signal $\zeta$ ainsi que le signal $\alpha$.

La porte OU 82 fournit à sa sortie le signal $G_a$ constituant une voie de signalisation d'une jonction. De la même façon, les dispositifs $B'_1$, $C'_1$, $D'_1$ fournissent des signaux $G_b$, $G_c$, $G_d$. Les quatre signaux $G_a$, $G_b$, $G_c$, $G_d$ sont ensuite multiplexés au moyen du multiplexeur SM1 qui est du type connu en soi. Un signal d'IT16 de multitrame 1 est reformé à la sortie du multiplexeur SM1, IT16 qu'il est aisé de remultiplexer de façon bien connue avec le signal de multitrame de la jonction $J_1$. On obtient également de la même façon quatre signaux $G_a$, $G_b$, $G_c$, $G_d$ de signalisation pour la seconde multitrame que le multiplexeur SM2 recombine pour reconstituer l'IT16 de multitrame 2.

De tels modes de réalisation, tant à l'émission qu'à la réception, ne sont pas limitatifs. Ils consistent en un regroupement des IT16 d'au moins deux jonctions entrantes sur une même jonction sortante, ce regroupement étant réalisé par un traitement en parallèle, voie par voie, chaque IT16 comportant quatre voies individuelles multiplexées dans le temps.

Comme on l'a dit plus haut, l'invention n'est pas limitée à la compression de deux signaux entrants en un signal unique de même débit, et avec un procédé du même type, il est possible de traiter par exemple quatre signaux entrants pour les réunir en un signal unique.

Dans ce dernier cas, on utilise une horloge $H_2$ de fréquence $H_1/4 = 125$ Hz. On code les transitions par un bit indiquant si la transition est montante ou descendante, et par deux bits définissant dans quel quart de la periodé d'horloge à 125 Hz se trouve la transition. On transmet ensuite inchangés un sur trois des bits qui suivent la transition.

En ce qui concerne la transmission des bits qui suivent les transitions, il n'est pas nécessaire dans l'invention que cette transmission se poursuive pendant tout l'intervalle de temps entre deux transitions, mais il est important qu'au moins un bit soit transmis inchangé après une transition, de manière à confirmer les informations liées à la transition.

**Revendications**

1. Procédé de compression des informations de signalisation transmises dans un train d'informations numériques MIC organisées en trames de multiplexage, les informations de signalisation étant insérées dans un intervalle de temps déterminé des trames MIC, les éléments binaires de signalisation transmis dans la même trame MIC appartenant à des voies de signalisation a, b, ... indépendantes de rythme $H_1$, caractérisé par le fait qu'on extrait les informations de signalisation du train numérique et on effectue en parallèle, pour chaque voie de signalisation, un traitement consistant à coder les transitions par un groupe d'éléments binaires dont le premier indique si la transition est montante ou descendante et le ou les suivants indiquent dans quelle nième fraction d'une période d'horloge correspondant à un rythme $H_1/n$ se situe la transition, et à transmettre inchangé au moins un des éléments binaires qui suivent la transition, les signaux $L_a$, $L_b$, ... obtenus contenant la même quantité d'informations que les voies de signalisation, mais ayant un débit divisé par n.

2. Procédé selon la revendication 1, caractérisé par le fait que dans cas où n est égal à 2, on transmet inchangés un sur deux des éléments binaires qui suivent une transition.

**Patentansprüche**

1. Verfahren zur Kompression von Signalinformationen die in einer Folge numerischer nach MIC in Multiplexrastern organisierter Informationen übertragen werden, wobei die Signalinformationen in ein bestimmtes Zeitintervall der MIC-Raster eingefügt sind und die binären Signalelemente, die im gleichen MIC-Raster übertragen werden, zu unabhängigen mit Takt $H_1$ Signalkanälen a, b ... gehören, dadurch gekennzeichnet, daß man die Signalinformationen aus der numerischen Folge herauszieht und parallelerweise für jeden Signalkanal eine Behandlung durchführt, die darin besteht, daß man die Übergänge durch eine Gruppe binärer Elemente kodiert, von denen das erste anzeigt, ob der Übergang ansteigend oder abfallend ist, während das oder die folgenden Elemente anzeigen in welchem n'ten Bruchteil einer Taktperiode entsprechend einem Takt $H_1/n$ der Übergang liegt und daß man mindestens eines der binären Elemente, welche auf den Übergang folgen ungeändert überträgt, wobei die erhaltenen Signale $L_a$, $L_b$ ... die gleiche Informationsmenge wie die Signalkanäle aber mit einem durch n dividierten Durchsatz enthalten.

2. Verfahren nach Anspruch 1, dadurch gekennzeichnet, daß man, wenn n gleich 2 ist, eines unter zweien der Elemente die einem Übergang folgen ungeändert überträgt.

**Claims**

1. Process for the compression of signalling data transmitted in a stream of digital PCM information organized in multiplexing frames, the signalling data being inserted in a specific time slot of the PCM frames, the signalling binary digits transmitted in the same PCM frame belonging to independent signalling channels a, b, ... of rate $H_1$, characterized by the steps of extracting the signalling data from the digital stream and effecting in parallel, for each signalling channel, a processing comprising the steps of coding the transitions by a group of binary digits of which the first indicates whether the transition is going up or down and the following indicates or indicate in which nth fraction of a clock period corresponding to a rate $H_1/n$ the transition is located and transmitting unchanged at least one of the bits which follow the transition, the signals $L_a$, $L_b$ ... obtained containing the same quantity of information as the signalling channels, but having a rate divided by n.

2. Process as claimed in claim 1, characterized in that in the case of n being equal to 2, one out of two of the bits which follow a transition are transmitted, unchanged.

fig.1

fig. 2

fig. 3

fig. 4

0033811

**0 033 811**

fig. 5

fig. 6

fig. 7

fig. 8